# EUROPÄISCHE PATENTSCHRIFT

(11) **EP 0 437 525 B1**
(45) Veröffentlichungstag und Bekanntmachung des Hinweises auf die Patenterteilung: **21.04.1993**
(21) Anmeldenummer: 89911794.9
(22) Anmeldetag: 09.10.1989
(51) Int. Cl.: F16K 31/60

(54) **BETÄTIGUNGSGRIFF FÜR SANITÄRE WASSERVENTILE**
OPERATING HANDLE FOR SANITARY WATER VALVE
POIGNEE D'ACTIONNEMENT POUR ROBINET D'EAU SANITAIRE

(30) Priorität: 10.10.1988 DE 3834459
(43) Veröffentlichungstag der Anmeldung: 24.07.1991
(73) Patentinhaber: IDEAL-STANDARD GMBH, D-53008 Bonn (DE)
(72) Erfinder: STEFFES, Rudolf, D-5569 Mueckeln (DE)
(74) Vertreter: VOSSIUS & PARTNER
(86) Internationale Anmeldenummer: EP8901185
(87) Internationale Veröffentlichungsnummer: WO9004125

(56) Entgegenhaltungen:
- EP-A- 0 121 219
- EP-A- 0 179 673
- FR-A- 2 440 506
- US-A- 2 797 941

## Beschreibung

Die Erfindung betrifft ein sanitäres Wasserventil mit auf eine Regelungsspindel aufgesetzten Griffteilen, wobei jeder Griff einen die Spindel hülsenförmig übergreifenden und an der Spindel verrastend festlegbaren Griffkörper aufweist, und wobei am Griffkörper ein gegenüber diesem verdrehbarer, in der Gebrauchsstellung über Sicherungsmittel festlegbarer Griffring angeordnet ist. Ein derartiges Wasserventil ist aus der EP-A-0 179 673 bekannt, wobei gemäß der EP-A-0 179 673 der Griffring über eine radial angeordnete und vom äußeren Umfang des Griffrings her betätigbare Schraube am Griffkörper festgelegt ist.

Soweit es zum Stand der Technik zählt, die Griffe von sanitären Wasserventilen mittels Adaptern aus Kunststoff an den Regelspindeln bzw. am Ventilkörper zu verrasten, so sind diese entsprechenden Griffteile selbst aus Kunststoff oder aus beispielsweise Zinkdruckguß hergestellt, weil sich bei diesen Materialien ein besseres Paßverhalten im Zusammenwirken mit den Rastteilen ergibt; auch sind bei der Fertigung solchermaßen ausgebildeter Griffteile die Toleranzen enger einzuhalten. Besteht jedoch der Wunsch, die Griffteile beispielsweise aus Messingpreß- oder Messingdruckgußteilen auszubilden, so sind die vorstehend erläuterten Ausbildungsmöglichkeiten für ein Griffteil nicht ausreichend. Bei der Verrastung von bekannten einstückigen Griffteilen mit dem Ventilkörper ergibt sich ferner das Problem, daß das Griffteil in der jeweils zutreffenden Gebrauchsstellung bereits montiert werden muß; nachträgliche Korrekturen der Griffzuordnung sind bei montierten Wasserventilen dann nicht mehr ohne weiteres möglich.

Der Erfindung liegt die Aufgabe zugrunde, ein sanitäres Wasserventil der eingangs genannten Gattung und insbesondere dessen Griffteil so weiterzubilden, daß sich ein großer Spielraum bei der Materialauswahl für die Griffe wie auch eine Vereinfachung der Montage, insbesondere im Hinblick auf Korrekturen an der Griffteilzuordnung, ergibt, und daß sowohl die Funktionssicherheit der Verbindung zwischen Griffring und Griffkörper als auch die optische Ausbildung des Griffrings verbessert werden.

Die Lösung dieser Aufgabe ergibt sich einschließlich vorteilhafter Ausgestaltungen und Weiterbildungen der Erfindung aus dem Inhalt der Patentansprüche.

Die Erfindung geht aus von dem Prinzip, daß am Griffkörper ein gegenüber diesem verdrehbarer, in der Gebrauchsstellung über Sicherungsmittel festlegbarer Gurtring angeordnet ist, wobei der Griffkörper in der an sich bekannten Weise über ein zwischengeschaltetes, aus Kunststoff bestehendes Rastteil mit dem Ventilkörper verrastet ist; der Griffring hingegen ist getrennt von dem Griffkörper ausgebildet, gegenüber diesem verdrehbar auf diesem mit Paßsitz aufsetzbar und ist für die Gebrauchsstellung am Griffkörper über Schrauben als Sicherungsmittel festgelegt, die von einem am oberen Ende der Innenflächen des Griffrings ringförmig um eine Mittelausnehmung verlaufenden Rücksprung aufgenommen werden. Hieraus ergibt sich der besondere Vorteil, daß noch nach der Montage des Wasserventils der Griffring mit einer Bedienungsformgebung im Verhältnis zur Spindelregulierung des Wasserventils nachjustierbar ist, indem der Griffring durch Verdrehung gegenüber dem verrastet unbeweglichen Griffkörper stufenlos in eine andere Relativstellung zu bringen ist und erst anschließend über die Sicherungsmittel an dem Griffkörper festgelegt wird. Hieraus ergibt sich auch die Möglichkeit, an einem montierten Wasserventil ohne großen Aufwand den Griffring auszuwechseln, diesen beispielsweise durch einen Griffring mit einer anderen Farbe oder mit einer anderen Bedienungsformgebung zu ersetzen.

Nach einem bevorzugten Ausführungsbeispiel der Erfindung weist der Griffkörper an seinem oberen Ende einen sich konisch verengenden beschnitt als Sitz für den darauf mit einer Mittelausnehmung aufgesetzten Griffring auf, wobei die Innenflächen der Mittelausnehmung des Griffringes einen der Konizität des zugeordneten Griffkörperabschnittes entsprechenden konischen Verlauf nehmen. Zur Festlegung des Griffringes weist dieser am oberen Ende seiner Sitzflächen einen ringförmig um die Mittelausnehmung verlaufenden Rücksprung auf, auf welchem in den Griffkörper einschraubbare Sicherungsmittel aufsitzen, so daß bei entsprechend angezogenen Sicherungsmitteln, vorzugsweise Schrauben, eine Verdrehsicherung der Teile gegeneinander sich ergibt. Schließlich ist der offene Griffring durch eine Schraubkappe abgedeckt, die ihrerseits den Griffring durchgreifend in am Griffkörper ausgebildete Gewindehalterungen einschraubbar ist.

Alternativ zu der vorstehenden Ausbildung kann zur Sicherung und Festlegung des Griffringes am Griffkörper auch ein Schraubring Verwendung finden, der auf die Oberkante des Griffkörpers in einen dort ausgebildeten Gewindeschlitz eindrehbar ist.

In der Zeichnung ist ein Ausführungsbeispiel der Erfindung wiedergegeben, welches nachstehend beschrieben ist.

Es zeigen:

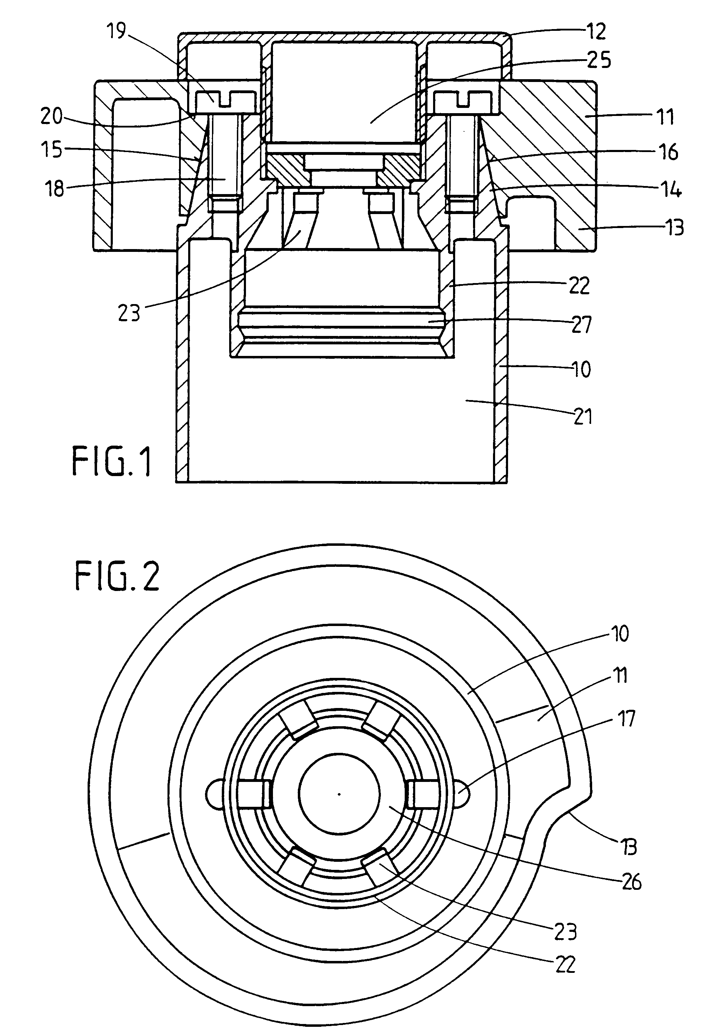

- Fig. 1: einen erfindungsgemäßen Griff für ein sanitäres Wasserventil im Schnitt,
- Fig. 2: eine Ansicht des Griffteils von unten.

Der Griff für ein im einzelnen nicht dargestelltes sanitäres Wasserventil besteht aus einem Griffkörper 10, einem Griffring 11 sowie einer Schraubkappe 12; der scheibenförmige Griffring 11 weist an einer Außenkante eine asymmetrisch vorragende Rundung 13 als Formgebung für die Bedienung auf.

Der hülsenförmige Griffkörper 10 hat an seinem oberen Ende einen konisch sich verengenden Abschnitt 14, auf dem der Griffring 11 mit einer Mittelausnehmung 15 im Paßsitz aufsitzt, indem die durch die Materialstärke des als Messingpreßteil hergestellten Griffringes ausgebildeten Innenflächen 16 der Mittelausnehmung 15 einen der Konizität des Griffkörperabschnitts 14 entsprechenden konischen Verlauf aufweisen. Somit ist ohne weitere Sicheren der Griffring 11 gegenüber dem Griffkörper 10 im Paßsitz stufenlos verderhbar.

In dem Griffkörper 10 sind im Bereich seines konischen Abschnittes 14 im vorliegenden Beispiel zwei Bohrungen 17 zur Aufnahme von Schrauben 18 ausgebildet, welche mit ihren Schraubenköpfen 19 bei aufgesetztem Griffring 11 einen ringförmig um dessen Paßausnehmung 15 verlaufenden Rücksprung 20 übergreifen und somit den Griffring 11 gegenüber dem Griffkörper 10 axial fixieren und festlegen. Da die Schrauben 18 bei der Montage mit einem entsprechenden Drehmoment angezogen werden, ergibt sich eine ausreichende Verdrehsicherung des Griffringes 11 gegenüber dem am Ventilgehäuse festliegenden Griffkörper 10.

Zur rastenden Verbindung des hülsenförmigen Griffkörpers 10 an dem nicht dargestellten Wasserventil weist der Griffkörper 10 eine in das Innere seines Hülsenhohlraumes 21 reichende Fixierhülse 22 mit einer Nut 27 zum Einklipsen eines mit einer Feder versehenen Rastteils auf. Zusätzlich sind im oberen Teil der Fixierhülse 22 Gewindehalterungen 23 angeordnet, in welche die Schraubkappe 12 von oben her in einer den Griffring 11 übergreifenden und dessen Mittelausnehmung 15 abdeckenden Stellung einschraubbar ist. Zwischen einem Schraubvorsprung 25 als Gewindeträger für die Schraubkappe 12 und dem Tiefsten der zugeordneten Gewindehalterungen 23 ist zusätzlich eine unterlegscheibe 26 angeordnet.

Bei der Montage des erfindungsgemäßen Griffteils an einem sanitären Wasserventil wird zunächst der Griffkörper mit dem Ventilkörper bzw. dessen Spindel verrastet, so daß eine Drehung des Griffkörpers eine Regelung des das Ventil durchströmenden Wasserstromes herbeiführt. Anschließend wird der Griffring auf den Griffkörper im Paßsitz aufgesetzt und bezüglich seiner Bedienungsgestaltung 13 gegenüber dem Griffkörper 10 fixiert, indem die Schrauben 18 eingesetzt und angezogen werden, so daß die Schraubenköpfe 19 auf den Rücksprung 20 des Griffringes 11 drücken. Sofern die Schrauben mit dem erforderlichen Drehmoment angezogen werden, ergibt sich eine Verdrehsicherung zwischen den Bauteilen 10, 11, so daß eine Drehung des Griffringes 11 in eine entsprechende Drehung des Griffkörpers 10 umgesetzt wird. Im Anschluß daran wird die Schraubkappe 12 mit ihrem Schraubvorsprung 25 in die Gewindehalterungen 23 des Griffkörpers 10 eingeschraubt.

## Patentansprüche

1. Sanitäres Wasserventil mit auf eine Regelungsspindel aufgesetzen Griffteilen, wobei jeder Griff einen die Spindel hülsenförmig übergreifenden und an der Spindel verrastend festlegbaren Griffkörper (10) aufweist, und wobei am Griffkörper (10) ein gegenüber diesem verdrehbarer, in der Gebrauchsstellung über Sicherungsmittel festlegbarer Griffring (11) angeordnet ist, dadurch gekennzeichnet, daß die Griffteile über Kunststoff-Rastteile aufgesetzt sind, und daß der Griffring (11) am oberen Ende seiner Innenflächen (16) einen ringförmig um eine Mittelausnehmung (15) des Griffrings (11) verlaufenden Rücksprung (20) zur Aufnahme von Schrauben (18) als Sicherungsmittel aufweist.

2. Wasserventil nach Anspruch 1, dadurch gekennzeichnet, daß der Griffkörper (10) an seinem oberen Ende einen sich konisch verengenden Abschnitt (14) als Sitz für den darauf mit der Mittelausnehmung (15) aufgesetzten Griffring (11) aufweist.

3. Wasserventil nach Anspruch 2, dadurch gekennzeichnet, daß die Innenflächen (16) der Ausnehmung (15) am Griffring (11) einen der Konizität des zugeordneten Griffkörperabschnitts (14) entsprechend konischen Verlauf nehmen.

4. Wasserventil nach einem der Ansprüche 2 oder 3, dadurch gekennzeichnet, daß der Griffkörper (10) im Bereich seines konischen Abschnittes (14) angeordnete Bohrungen (17) zur Aufnahme von den Schrauben (18) als Sicherungsmittel für den Griffring (11) aufweist.

5. Wasserventil nach Anspruch 4, dadurch gekennzeichnet, daß die Schrauben (18) mit ihren Schraubenköpfen (19) bei aufgesetztem Griffring (11) den Rücksprung (20) des Griffringes (11) übergreifen.

6. Wasserventil nach einem der Ansprüche 1 bis 5, dadurch gekennzeichnet, daß der Griffkörper (10) in seinem zentralen Hülsenhohlraum (21) Gewindehalterungen (23) zur Verschraubung einer den Griffring (11) in seinem offenen Bereich abdeckenden und diesen übergreifenden Schraubkappe (12) aufweist.

7. Wasserventil nach Anspruch 6, dadurch gekennzeichnet, daß in die Gewindehalterungen (23) eine Unterlegscheibe (26) eingelegt ist, auf der die Schraubkappe (12) aufsetzt.

8. Wasserventil nach einem der Ansprüche 2 bis 7, dadurch gekennzeichnet, daß der Griffkörper (10) am oberen Ende seines konischen Abschnitts (14) einen Gewindeeinschnitt zur Aufnahme eines in diesen einschraubbaren Schraubringes aufweist.

## Claims

1. A sanitary water valve having handle parts mounted on a control spindle, each handle comprising a handle body (10) overlapping the spindle in a sleeve-like fashion and being fixable to the spindle in a locking fashion, wherein a handle ring (11) rotatable relative to the handle body (10) and being fixable in the operating position via securing means is arranged on the handle body (10), characterized in that the handle parts are mounted on the control spindle via plastic locking parts and that, at the upper end of its inner surfaces (16), the handle ring (11) is provided with a backward projection (20) being arranged annularly around a middle recess (15) of the handle ring (11) for receiving screws (18) as securing means.

2. The water valve as claimed in claim 1, characterized in that the handle body (10) comprises at its upper end a tapered section (14) as a seat for the handle ring (11) mounted thereon with the middle recess (15).

3. The water valve as claimed in claim 2, characterized in that the inner surfaces (16) of the recess (15) on the handle ring (11) have a taper corresponding to that of the associated section (14) of the handle body (10).

4. The water valve as claimed in claim 2 or 3, characterized in that the handle body (10) comprises bores (17) arranged in the region of its conical section (14) for receiving screws (18) as securing means for the handle ring (11).

5. The water valve as claimed in claim 4, characterized in that the screw heads (19) of the screws (18) overlap the backward projection (20) of the handle ring (11) when the handle ring (11) is mounted.

6. The water valve as claimed in any of claims 1 to 5, characterized in that the handle body (10) comprises in its central sleeve cavity (21) thread mountings (23) for screwing on a screw cap (12) covering the open region of the handle ring (11) and overlapping said ring.

7. The water valve as claimed to claim 6, characterized in that in the thread mountings (23) a plain washer (26) is inserted on which the screw cap (12) is mounted.

8. The water valve as claimed in any of claims 2 to 7, characterized in that the handle body (10) comprises at the upper end of its conical section (14) a thread incision for receiving a screw ring which is screwable into said incision.

## Revendications

1. Robinet d'eau sanitaire comprenant des éléments de poignée montés sur une tige de réglage, chaque poignée présentant un corps de poignée (10) qui recouvre la tige à la manière d'un manchon et qui peut être fixé en s'accrochant sur la tige, une bague de poignée (11) qui peut tourner par rapport au corps de poignée (10) et qui peut être fixée dans la position d'utilisation par des moyens de fixation étant agencée sur ledit corps de poignée, caractérisé en ce que les éléments de poignée sont montés par l'intermédiaire d'éléments d'arrêt en matière plastique et en ce que la bague de poignée (11) présente à l'extrémité supérieure de ses faces internes (16) un épaulement (20), qui s'étend en forme d'anneau autour d'un évidement central (15) de la bague de poignée (11), pour recevoir des vis (18) en tant que moyen de fixation.

2. Robinet d'eau suivant la revendication 1, caractérisé en ce que le corps de poignée (10) présente à son extrémité supérieure une partie (14), qui se rétrécit de façon conique, en tant qu'assise pour la bague de poignée (11) montée là-dessus par l'évidement central (15).

3. Robinet d'eau suivant la revendication 2, caractérisé en ce que les faces internes (16) de l'évidement (15) prennent dans la bague de poignée (11) un profil conique correspondant à la conicité de la partie adjointe (14) du corps de poignée.

4. Robinet d'eau suivant l'une des revendications 2 et 3, caractérisé en ce que le corps de poignée (10) présente des perçages (17), agencés dans la zone de sa partie conique (14), pour recevoir les vis (18) en tant que moyens de fixation de la bague de poignée (11).

5. Robinet suivant la revendication 4, caractérisé en ce que lorsque la bague de poignée (11) est montée, les vis (18) recouvrent par leurs têtes de vis (19) l'épaulement (20) de la bague de poignée (11).

6. Robinet d'eau suivant l'une des revendications 1 à 5, caractérisé en ce que le corps de poignée (10) présente dans sa cavité de manchon centrale (21) des fixations à filet (23) pour le vissage d'une coiffe à vis (12) qui couvre la bague de poignée (11) dans sa zone ouverte et qui recouvre cette dernière.

7. Robinet d'eau suivant la revendication 6, caractérisé en ce qu'une rondelle (26) sur laquelle pose la coiffe à vis (12), est insérée dans les fixations à filet (23).

8. Robinet d'eau suivant l'une des revendications 2 à 7, caractérisé en ce que le corps de poignée (10) présente à l'extrémité supérieure de sa partie conique (14), un creux taraudé pour recevoir une bague filetée pouvant être vissée dans ledit creux.
